# EUROPEAN PATENT APPLICATION

(11) **EP 2 280 333 A1**
(43) Date of publication of application: **02.02.2011**
(21) Application number: 10012639.0
(22) Date of filing: 10.09.2002
(51) Int. Cl.: G06F 3/033, G06F 3/01

(54) **Command input system**

(30) Priority: 11.09.2001 DE 10144634
(62) Divisional of application: 02019878.4
(71) Applicant: TRW Automotive Electronics & Components GmbH, 78315 Radolfzell (DE)
(72) Inventor: Baldauf, Siegfried, 86150 Augsburg (DE); Bubb, Peter Dr., 82194 Gröbenzell (DE); Götz, Matthias, 80796 München (DE); Hafner, Ernst, 88709 Hagnau (DE); Albrecht, Stephan, 83703 Gmund am Tegernsee (DE)
(74) Representative: Prinz & Partner

(57) **Abstract**

The command input system has a display screen and a touch-sensitive input field (42). On the input field (42), there is a spatial relationship with control options shown on the display field of the display screen. The input field conveys tactile feedback about the available and/or executed control actions. According to a special aspect, the input field has a flexible yielding, smooth surface (42) beneath which a plurality of actuators (40) are situated that generate a palpable reaction in response to an executed command input or to an available command input option. The command input system is especially well-suited for use in vehicles since it does not require constant eye contact with the display field.

## Description

The present invention relates to a command input system with a display screen and a touch-sensitive input field.

Tactile command input systems are known especially from the realm of data processing equipment, particularly in so-called notebooks and laptops, where the touch-sensitive input field is generally referred to as a touchpad. In desktop systems, such a touchpad replaces the commonly employed computer mouse and serves to control the cursor and to trigger control actions. The cursor movements and the control actions are shown on the display field of the display screen. Since a touchpad only has a surface area of a few square centimeters, no spatial relationship exists between, on the one hand, the control options shown on the display field and the cursor movements and, on the other hand, the touch positions on the touchpads. As a result, in spite of the limited surface area of the touchpad, the cursor can be moved over the entire surface area of the display field.

With such command input systems, constant eye contact with the display field is needed in order to specifically select one of the control options shown there. Therefore, such a command input system is only suitable in environments that permit constant eye contact with the display field. Generally speaking, this condition cannot be met, for example, in vehicles, at least not for the control of vehicle features by the driver while driving.

The present invention provides a command input system that, due to tactile feedback about available or executed input functions, does not require constant eye contact with the display field of the display screen. Specifically, the invention provides a command input system with a display screen where command input options are displayed, and a touch-sensitive input field. A spatial correspondence exists between command input options shown on the display screen and the physical surface area on the touch-sensitive input field, as signalled to a user by tactile feedback from the input field. Further, the input field has a flexibly yielding, smooth surface beneath which a plurality of actuators are situated that generate a palpable reaction in response to an executed command input or to an available command input option. As used herein, "spatial correspondence" means that the display field where available command input options appear on the display screen and the input field are of a generally similar, if not identical, shape, although their seizes may be different (substantially congruent shapes), and commands referred to by command input options appearing at particular locations in the display field, are executed when similar locations are touched on the input field. Preferably, at least the contour of the input field is of a palpable structure such as a raised rim. Also, command input options are easily recognised on the input field by corresponding palpable structures.

Further details of the invention will ensue from the following description of several embodiments with reference to the accompanying drawings. In the drawings:
Figure 1a shows a first embodiment, not in accordance with the invention, with an input field that is surrounded by an orientation frame;
Figure 1b shows a second embodiment, not in accordance with the invention, with an input field that is surrounded by an orientation frame;
Figure 2 shows an embodiment, not in accordance with the invention, in which command input elements can be felt underneath a smooth, but flexibly yielding surface of the input field;
Figure 3 shows different three-dimensional shapes of the input field; and
Figure 4 shows an embodiment, in accordance with the invention, in which the input field has a plurality of local actuators situated beneath a flexible tensioned foil.

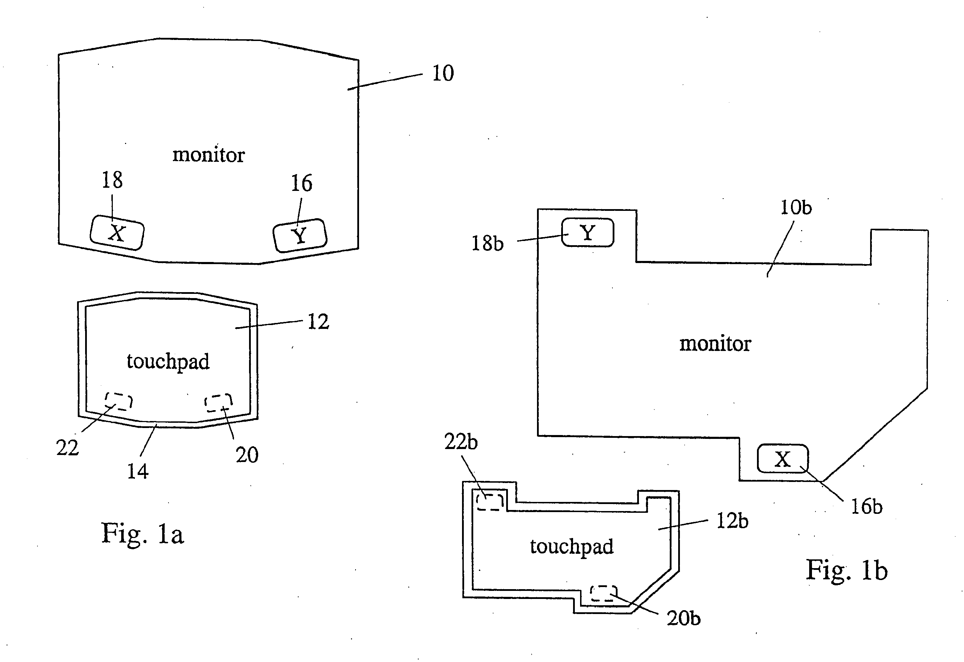

In the embodiment shown in Figure 1a, a flat display screen 10 has an irregular octogonal shape close to that of a rectangle. A touch-sensitive input field 12, also referred to as a touchpad below, has the same general shape as the display screen, although it is of a smaller size. Input field 12 is surrounded by a palpable, especially raised, continuous rim or frame 14. Frame 14 preferably has a relatively soft feel along its inner periphery and a relatively hard feel along its outer periphery. Near the right-hand and the left-hand lower corners of display screen 10, symbolic "push-buttons" 16, 18 are displayed, labelled "X" and "Y", respectively. Similarly, input field (touchpad) 12 has sensitive locations 20, 22 near its right-hand and left-hand lower corners, as suggested by dotted lines. When input field 12 is touched at location 20 or 22, a command is generated which is associated with "push-button" 16 or 18 appearing on display screen 10.

The Fig. 1b embodiment is generally similar, but has an irregular n-cornered shape (11 corners, actually). It also has a pair of "push-button" symbols 16b, 18b on the display screen 10b and corresponding sensitive locations 20b, 22b on input field 12b.

It should be understood that in both embodiments, the number, shape and distribution of symbols on the display field of the display screen and of corresponding sensitive locations on the input field may vary according to intended use.

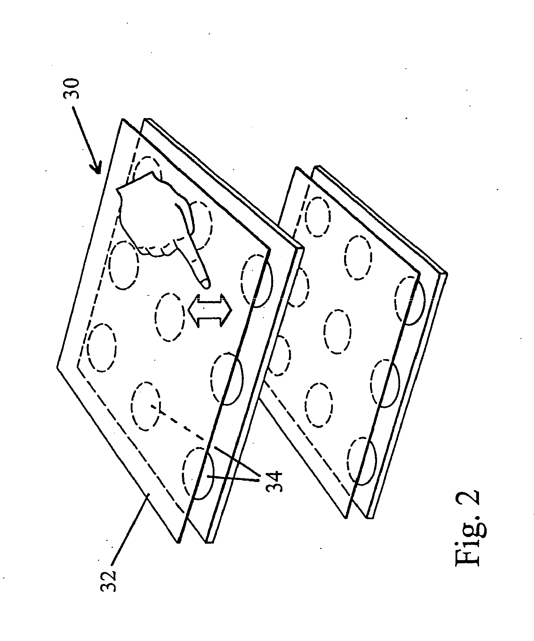

In the embodiment shown in Figure 2, the input field (touchpad) 30 has a flexibly yielding tensioned foil 32 with a generally smooth outer surface. Beneath foil 32, a plurality of palpable command input structures 34 are situated. These structures 34 are associated with corresponding command input options shown on the display field of the display screen.

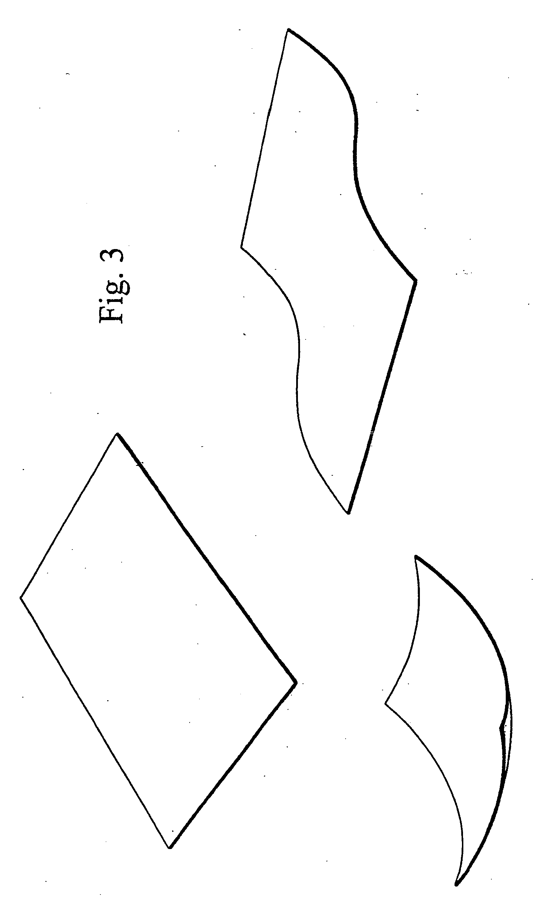

In the embodiment shown in Figure 3, the input field or touchpad generally has a structured tree-dimensional surface wherein palpable structures are associated with corresponding command input options shown on the display field. The palpable structures can be of various kinds. Especially suitable types are raised, flat shaped elements, indented flat shaped elements, bulges, geometric shaped elements such as circles, rectangles, triangles, roughened surfaces, smooth surfaces, palpable hard/soft material transitions and palpable rigid/flexible material transitions.

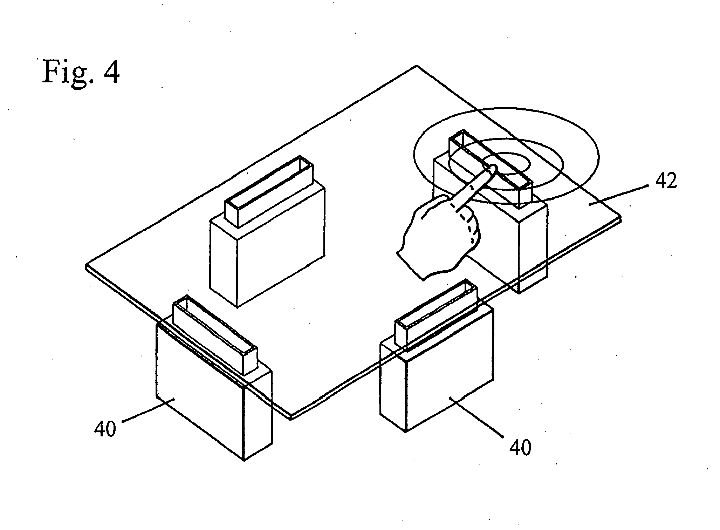

In the embodiment according to the invention shown in Figure 4, actuators 40 are situated at specific locations beneath a flexible surface of the input field or touchpad 42. The actuators 40 are associated with command input options shown on the display field. These actuators 40 generate palpable, tactile feedback about the executed command actions or available command input options, corresponding to the contents on the display screen. The actuators can be made on the basis of different technologies, including electromechanic, electromagnetic, piezoelectric, pneumatic or hydraulic.

## Claims

1. A command input system with a display screen where command input options are displayed and a touch-sensitive input field, a spatial correspondence existing between command input options shown on the display screen and the physical surface area on the touch-sensitive input field, as signalled to a user by tactile feedback from the input field, **characterized in that** the input field has a flexibly yielding, smooth surface beneath which a plurality of actuators are situated that generate a palpable reaction in response to an executed command input or to an available command input option.

2. The command input system according to Claim 1, **characterized in that** the actuators are selected from among the following types:
• electromechanical,
• electromagnetic,
• piezoelectric,
• pneumatic
• hydraulic.
